(19) Europäisches Patentamt
European Patent Office
Office européen des brevets

(11) **EP 2 840 371 A2**

(12) **EUROPÄISCHE PATENTANMELDUNG**

(43) Veröffentlichungstag:
**25.02.2015 Patentblatt 2015/09**

(51) Int Cl.:
***G01K 17/20*** *(2006.01)*

(21) Anmeldenummer: **14001909.2**

(22) Anmeldetag: **02.06.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **19.06.2013 DE 202013005546 U**

(71) Anmelder: **Bachl Dämmtechnik GmbH & Co. KG 86899 Landsberg a. Lech (DE)**

(72) Erfinder: **Schiffke, Peter 86836 Obermeitingen (DE)**

(74) Vertreter: **Leinweber & Zimmermann Rosental 7, II. Aufgang 80331 München (DE)**

(54) **Dämmelementanordnung**

(57) Die Erfindung betrifft eine Dämmelementanordnung, insbesondere für die Fassadendämmung, mit einem Dämmelement, das von zwei im Wesentlichen ebenen und etwa parallel zueinander verlaufenden Hauptflächen begrenzt ist, wobei die Dämmelementanordnung mindestens einen Messsensor zur Messung eines Umgebungsparameters, insbesondere einer Umgebungstemperatur, einer Luftfeuchtigkeit und/oder eines Wärmestroms aufweist, der einer der Hauptflächen des Dämmelements zugeordnet, insbesondere daran angebracht ist.

Fig. 1

EP 2 840 371 A2

**Beschreibung**

Die Erfindung betrifft eine Dämmelementanordnung, insbesondere für die Fassadendämmung, mit einem Dämmelement, das von zwei im Wesentlichen ebenen und etwa parallel zueinander verlaufenden Hauptflächen begrenzt ist.

Eine solche Dämmelementanordnung kann Teil eines Wärmedämmverbundsystems sein, das regelmäßig zum Zweck der Fassadendämmung insbes im Bereich der Gebäudesanierung eingesetzt wird. Wärmedämmverbundsysteme weisen Dämmelemente aus einem wärmedämmenden Material wie etwa Polystyrolhartschaum, Mineralwolle wie etwa Stein- und Glaswolle, Mineralschaum, Kalziumsilikathydrate oder Polyurethanschaum auf, welche mit Hilfe von mechanischen Befestigungsmitteln wie etwa Dübeln oder geeigneten Klebstoffen auf einem bestehenden Untergrund einer zu dämmenden Struktur befestigt werden. Auf die Dämmplatten wird eine Armierungsschicht aus einem Armierungsgewebe und einem Armierungsmörtel aufgebracht, der gleichzeitig als Unterputz benutzt werden kann. Den Abschluss des Wärmedämmverbundsystems bildet der auf die Armierungsschicht aufgebrachte Außenputz, welcher in Abhängigkeit von den gestalterischen Anforderungen auch noch mit einer geeigneten Fassadenfarbe angestrichen werden kann.

Bekannte Dämmelemente sind in der Druckschrift WO 2012/022393 beschrieben, deren Offenbarungsgehalt im Hinblick auf den Aufbau und die Merkmale der Dämmelemente und der daraus zu fertigenden Wärmedämmverbundsysteme durch Verweis in die vorliegende Offenbarung aufgenommen wird.

Durch Dämmmaßnahmen wie etwa die Anbringung eines Wärmedämmverbundsystems an einer zu dämmenden Struktur wie etwa an der Außenwand eines Gebäudes wird die Energieeffizienz beim Heizen des Gebäudes verbessert bzw. die Transmissionswärmeverluste des Gebäudes werden gesenkt.

Der Energiebedarf für das Heizen eines Gebäudes sowie die Einsparung nach einer Sanierungsmaßnahme lassen sich normativ exakt berechnen. Für diese Berechnung werden die Wärmedurchgangskoeffizienten der Struktur vor der Sanierung $U_{alt}$ und nach der Sanierung $U_{neu}$, die Dämmfläche A sowie die zu erwartende Temperaturdifferenz (Innen-/Außentemperatur) herangezogen. Die Wärmedurchgangskoeffizienten lassen sich u. a. aus der Wärmeleitfähigkeit sowie der Dicke der zu dämmenden Struktur und des Dämmelements bestimmen. Die tatsächliche Energieeinsparung weicht oftmals von diesem berechneten Wert ab, da dieser durch das Nutzerverhalten maßgeblich beeinflusst wird. Insbesondere haben das Lüftungs- und das Heizverhalten des Nutzers großen Einfluss auf die sich durch die Sanierung ergebende Energieeinsparung. Dies führt zu Verunsicherungen und ist vergleichbar mit den Verbrauchsangaben bei Autos, bei denen die tatsächlichen Verbrauchswerte aufgrund des Nutzerverhaltens ebenfalls von den berechneten Verbrauchswerten abweichen. Ferner herrscht oftmals Unsicherheit darüber, ob mit einer Sanierungsmaßnahme die Gefahr für Schimmelpilzbildung verbunden ist, bzw. ob ein gutes Innenraumklima erhältlich ist.

Die Steigerung der Energieeffizienz im Gebäudesektor wird nicht zuletzt deshalb derzeit kontrovers diskutiert, weil es oftmals an der Vorstellung mangelt, welche Sanierungsmaßnahmen zu welchen tatsächlichen Ergebnissen führen. Ferner werden die Nutzer teilweise nach der Durchführung einer Sanierungsmaßnahme nicht in ausreichendem Maß über ein im Hinblick auf Energieeffizienz und geringe Schimmelbildung optimales Heiz- und Lüftungsverhalten aufgeklärt, bzw. entsprechende Aufklärungsmaßnahmen geraten beim Nutzer in Vergessenheit, so dass aufgrund eines falschen Heiz- und Lüftungsverhaltens letztlich nicht die theoretisch möglichen Werte für Energieeinsparung und optimales Raumklima erhalten werden.

In Anbetracht dieser Probleme ist es die Aufgabe der vorliegenden Erfindung, die durch eine Dämmmaßnahme zu erhaltende Energieeinsparung und die sich ergebenden Raumklimawerte zu verbessern.

Diese Aufgabe wird erfindungsgemäß durch eine Weiterbildung der beschriebenen Dämmelementanordnung gelöst, die im Wesentlichen dadurch gekennzeichnet ist, dass die Dämmelementanordnung mindestens einen Messsensor zur Messung eines Umgebungsparameters, insbesondere einer Umgebungstemperatur, einer Luftfeuchtigkeit und/oder eines Wärmestroms aufweist, der einer der Hauptflächen des Dämmelements zugeordnet, insbesondere daran angebracht ist.

Die Erfindung geht auf die Erkenntnis zurück, dass eine transparente Darstellung der Auswirkungen von Sanierungsmaßnahmen erforderlich ist, um die Akzeptanz solcher Maßnahmen zu erhöhen und den Nutzer dazu zu veranlassen, sein Verhalten so anzupassen, dass optimale Energieeinsparwerte erhalten werden. Diese Transparenz wird erfindungsgemäß dadurch erreicht, dass das Dämmelement auf einer seiner Begrenzungsflächen, nämlich entweder auf der inneren Hauptfläche, die der zu dämmenden Struktur zugewandt ist, oder auf der äußeren Hauptfläche, die dem Außenraum zugewandt ist, mit einem Messsensor zur Messung eines Umgebungsparameters ausgestattet ist. Der gemessene Umgebungsparameter lässt Rückschlüsse auf die tatsächlichen Auswirkungen der Sanierungsmaßnahme zu. Der Nutzer kann den Wert des Umgebungsparameters übersehen und überwachen, und sein Heizverhalten entsprechend anpassen.

"Angebracht" bedeutet erfindungsgemäß, dass der Messsensor derart an einer der Hauptflächen des Dämmelements befestigt ist bzw. in die Hauptfläche derart integriert ist, dass der Wert des Umgebungsparameters auf der entsprechenden Seite des Dämmelements gemessen werden kann.

Da der Messsensor an einer der Hauptflächen des Dämmelements angebracht ist, ist er nach dem Installieren des Wärmedämmverbundsystems an der zu dämmenden Struktur nicht mehr von außen sichtbar: Die innere Hauptfläche des Dämmelement ist der zu dämmenden Struktur zugewandt und die äußere Hauptfläche des Dämmelements ist von einer Deckschicht wie etwa von einer Armierungs- oder Putzschicht bedeckt, die regelmäßig keine ins Gewicht fallende Dämmungseigenschaft hat. Dies führt zum einen zu einer optisch ansprechenden gedämmten Struktur und verhindert zum anderen Beschädigungen des Messsensors durch mechanische Einwirkungen, übermäßige Sonneneinstrahlung oder andere Witterungseinflüsse.

Bspw. lassen sich durch einen an der inneren Hauptfläche angebrachten Luftfeuchtigkeitssensor Rückschlüsse auf die Gefahr einer Schimmelpilzbildung ziehen. Bspw. lassen sich durch einen an der inneren Hauptfläche angebrachten Temperatursensor Rückschlüsse auf die Dämmwirkung des Dämmelements gegenüber der Dämmwirkung der zu dämmenden Struktur ohne Dämmelement ziehen. Bspw. lässt sich durch einen an der äußeren Hauptfläche angebrachten Temperatursensor die Außentemperatur dauerhaft überwachen, ohne dass an der Außenwand ein Temperaturmesser sichtbar ist, der ferner anfällig für Beschädigungen ist. Alternativ lässt sich der zwischen den beiden Hauptflächen des Dämmelements fließende Wärmestrom mit einem entsprechenden Messsensor auch direkt messen, so dass unmittelbar Rückschlüsse über Transmissionswärmeverluste nach/vor der Dämmmaßnahme gezogen werden können. An der äußeren und/oder an der inneren Hauptfläche können erfindungsgemäß jeweils mehrere Messsensoren zur Messung verschiedener Umgebungsparameter angebracht sein.

Zweckmäßigerweise weist die erfindungsgemäße Dämmelementanordnung einen zweiten Messsensor zur Messung eines Umgebungsparameters auf, der an der der ersten Hauptfläche entgegengesetzten Hauptfläche des Dämmelements angebracht ist. Mit anderen Worten ist der erste Messsensor an der nach außen gewandten Hauptfläche des Dämmelements und der zweite Messsensor an der nach innen in Richtung auf die zu dämmende Struktur gewandten Hauptfläche des Dämmelements vorzugsweise auf etwa gleicher Höhe und Breite wie der erste Messsensor angebracht. Besonders bevorzugt sind beide Messsensoren jeweils in einem zentralen Bereich der Dämmplatte angebracht. Es hat sich als sinnvoll herausgestellt, dass der erste und der zweite Sensor zur Messung desselben Umgebungsparameters eingerichtet sind. Wenn bspw. beide Messsensoren zur Messung der Temperatur eingerichtet sind, kann unter Rückgriff auf einen zuvor bestimmten Wert des Wärmedurchgangskoeffizienten des Dämmelements der Wärmestrom durch das Dämmelement berechnet werden. Alternativ oder zusätzlich kann der Wärmefluss durch entsprechende, an der inneren und der äußeren Hauptfläche angebrachte Messsensoren direkt gemessen werden.

Im Hinblick auf eine einfache Installation der Dämmelementanordnung an der zu dämmenden Struktur hat es sich als zweckmäßig herausgestellt, wenn der erste Messsensor in die erste Hauptfläche des Dämmelements integriert ist und/oder der zweite Messsensor in die zweite Hauptfläche integriert ist. Insbesondere steht der Messsensor ausgehend von der etwa ebenen Hauptfläche des Dämmelements weniger als 1 cm, bevorzugt weniger als 0,5 cm, besonders bevorzugt überhaupt nicht vor. Der Messsensor kann also zumindest teilweise in eine Vertiefung in der Hauptfläche des Dämmelements eingelassen sein und/oder kann als in Dickenrichtung der Dämmplatte dünnes Element ausgeführt sein. Der Messsensor kann an der Dämmplatte angeklebt oder mit Befestigungselementen befestigt sein.

Eine bevorzugte Ausführungsform der erfindungsgemäßen Dämmelementanordnung zeichnet sich durch mindestens einen weiteren Messsensor zur Messung eines Umgebungsparameters im Inneren der mit dem Dämmelement zu dämmenden Struktur aus. Der weitere Messsensor kann unter einem Abstand von der inneren Hauptfläche des Dämmelements angeordnet sein, wobei dieser Abstand etwa der Dicke der zu dämmenden Struktur, insbesondere einer Außenwand entsprechen kann. Auf diese Weise sind insgesamt drei Messebenen gebildet: eine äußere Messebene auf der Außenseite, die etwa durch die äußere Hauptfläche des Dämmelements parallel zu dieser verläuft, eine Zwischen-Messebene, die etwa durch die innere Hauptfläche des Dämmelements parallel zu dieser verläuft, und eine innere Messebene, die parallel zu den anderen Messebenen durch den Innenraum der zu dämmenden Struktur verläuft. Die Werte der Umgebungsparameter in diesen drei Messebenen lassen Rückschlüsse über die Energieeinsparung infolge der Sanierungsmaßnahme, über die Gefahr einer Schimmelpilzbildung, sowie über Wärmeströme durch Außenwand und Dämmelement zu, so dass der Nutzer einen Überblick über die Auswirkungen der Dämmmaßnahme erhält, wenn er die Messwerte regelmäßig abliest und sein Heiz- und Lüftverhalten entsprechend anpasst.

Die Energieeinspareffekte der Sanierungsmaßnahme lassen sich für die zu dämmende Struktur darstellen, wenn der erste Messsensor ein äußerer Messsensor zur Messung der Umgebungstemperatur an der äußeren Hauptfläche des Dämmelements ist, der zweite Messsensor ein innerer Messsensor zur Messung der Umgebungstemperatur an der inneren Hauptfläche des Dämmelements und/oder der dritte Messsensor ein Messsensor zur Messung einer Innenraumtemperatur ist.

Bspw. lässt sich der Wärmestrom aus den gemessenen Temperaturwerten mittels der folgenden Formel berechnen:

$$I_{neu} = U_{neu}(T_{innen} - T_{außen})A$$

$$I_{alt} = U_{alt}(T_{innen} - T_{außen})A$$

$I_{alt/neu}$ ist der Wärmestrom (in Watt), $T_{innen}$ ist die Innentemperatur, $T_{auße}$, ist die Außentemperatur, $U_{neu}$ ist der Wärmedurchgangskoeffizient der gedämmten Struktur, $U_{alt}$ ist der Wärmedurchgangskoeffizient der Struktur vor der Dämmung und A ist die Dämmfläche. Die sich ergebenden Transmissionswärmeverluste vor und nach der Dämmmaßnahme können angezeigt und abgelesen werden. Durch Summation können auch die monatlichen, jährlichen etc. Wärmeverluste berechnet und ebenfalls angezeigt werden. Durch einen Vergleich alt/neu ergibt sich die Energieeinsparung. Alternative Berechnungsmethoden können der einschlägigen Fachliteratur entnommen werden.

Unterschiede im Temperaturabfall zwischen der äußeren Messebene und der Zwischen-Messebene sowie zwischen der Zwischen-Messebene und der inneren Messebene lassen Rückschlüsse auf die Wirkung der Dämmmaßnahme zu. Die einzelnen Temperaturen können gespeichert, überwacht und/oder dem Nutzer separat angezeigt werden. Die Gebäudeheizung kann entsprechend gesteuert und/oder geregelt werden.

Falls die tatsächliche Energieeinsparung nicht der zu erwartenden Energieeinsparung entspricht, kann der Nutzer ferner darüber informiert werden, dass er sein Heiz- und/oder Lüftverhalten ändern sollte.

Alternativ kann der erste Messsensor ein äußerer Messsensor zur Messung der Luftfeuchtigkeit an der äußeren Hauptfläche des Dämmelements, der zweite Messsensor ein innerer Messsensor zur Messung der Luftfeuchtigkeit an der inneren Hauptfläche des Dämmelements und/oder der dritte Messsensor ein Messsensor zur Messung einer Innenraumluftfeuchtigkeit sein. Durch Messung der Luftfeuchtigkeitswerte können Rückschlüsse auf das Raumklima sowie die Gefahr einer Schimmelpilzbildung gezogen werden. Falls die Gefahr einer Schimmelpilzbildung besteht, kann der Nutzer darüber informiert werden, dass er sein Heiz- und/oder Lüftverhalten ändern sollte.

Wenn sowohl Temperatur als auch relative Luftfeuchtigkeit in einer Messebene gemessen werden, lässt sich daraus mittels der üblichen Berechnungsmethoden die Gefahr der Schimmelpilzbildung in dieser Messebene aufzeigen, bzw. umgekehrt lässt sich die Sicherheit vor Schimmelpilzbildung demonstrieren. Die Gefahr für Schimmelpilzbildung kann in den verschiedenen Messebenen unterschiedlich hoch sein, so dass eine Messung sowohl an der inneren Hauptfläche als auch an der äußeren Hauptfläche des Dämmelements sinnvoll sein kann.

In einer besonders bevorzugten Ausführungsform weist die Dämmelementanordnung mindestens zwei an jeder Hauptfläche des Dämmelements angebrachte Messsensoren zur Messung verschiedener Umgebungsparameter auf. Zusätzlich kann die Dämmelementanordnung mindestens zwei Messsensoren auf der Innenseite der zu dämmenden Struktur aufweisen. Bspw. sind sowohl an der äußeren als auch an der inneren Hauptfläche des Dämmelements jeweils ein Temperaturmessgerät und ein Luftfeuchtigkeitsmessgerät angebracht.

Die Dämmelementanordnung kann eine durch das Dämmelement hindurchführende Durchführung zum Durchführen von Anschlussleitungen mindestens eines Messsensors durch das Dämmelement in einer quer, insbesondere etwa senkrecht zu den Hauptflächen verlaufenden Richtung aufweisen. Diese Durchführung dient zur Verlegung der Anschlussleitungen der an der äußeren Hauptfläche des Dämmelements angebrachten Messsensoren in Richtung auf die innere Hauptfläche oder umgekehrt. Das Anbringen der Messsensoren an der äußeren Hauptfläche wird so vereinfacht, da deren Anschlussleitungen durch die Durchführung geführt und ausgehend von der Innenseite des Dämmelements ggf. zusammen mit den Anschlussleitungen von Messsensoren an der inneren Hauptfläche mit einer Stromversorgungseinrichtung und/oder einer Verarbeitungseinrichtung verbunden werden können. Dazu sind die Anschlussleitungen mindestens eines an der äußeren Hauptfläche angebrachten Messsensors durch die Durchführung geführt, so dass sie an der inneren Hauptfläche aus dem Dämmelement heraustreten. Das Installieren der Dämmelementanordnung an der zu dämmenden Struktur wird auf diese Weise vereinfacht, da einer Verkabelung nur auf der inneren Seite der Dämmelementanordnung erforderlich ist.

Zweckmäßigerweise ist eine Länge der Anschlussleitungen der Messsensoren ausgehend von der inneren Hauptfläche des Dämmelements länger als 30 cm, insbesondere länger als 50 cm. Insbesondere beträgt die Länge etwa 1 m oder mehr. Die Anschlussleitungen können so durch einen Durchgang durch die zu dämmende Struktur geführt werden und im Innenraum der Struktur ggf. zusammen mit Anschlussleitungen dort angeordneter weiterer Messsensoren mit weiteren Einrichtungen verbunden werden.

Im Hinblick auf die Nutzerfreundlichkeit hat es sich als zweckmäßig erwiesen, dass die Dämmelementanordnung eine mit den Messsensoren gekoppelte Signalverarbeitungseinrichtung aufweist, die zur Berechnung einer Kenngröße, insbes. einer Dämmungskenngröße aus einem oder mehreren der gemessenen Umgebungsparameter eingerichtet ist. Die Signalverarbeitungseinrichtung kann einen Speicher aufweisen, in der bspw. Wärmedurchgangskoeffizienten der einzelnen Bauteile abgespeichert sind, mit denen unter Verwendung der gemessenen Umgebungsparameter Dämmungskenngrößen wie etwa Wärmeströme, Transmissionswärmeverluste, Energieeinsparung, Energieeffizienz etc. von der Signalverarbeitungseinrichtung berechnet werden.

Die berechneten Dämmungskenngrößen und/oder die Messwerte der Messsensoren können durch eine Anzeigevorrichtung angezeigt werden. Die Anzeigevorrichtung kann bspw. ein Display oder ein Monitor sein. Die Signalverarbeitungseinrichtung kann derart programmiert sein, dass die Temperatur und/oder Luftfeuchtigkeit in verschiedenen Messebenen in vorbestimmten oder vom Nutzer einstellbaren Zeitintervallen gemessen wird und in Form eines Diagramms von der Anzeigevorrichtung angezeigt wird. Aus den gemessenen Temperaturwerten kann die Signalverarbeitungseinrichtung bspw. jeweils unter Rückgriff auf im Speicher abgespeicherte Werte den aktuellen Wärmestrom durch die Dämmfläche berechnen, der wiederum von der Anzeigevorrichtung angezeigt werden kann. Die gesamte durch die Dämmfläche tretende Wärmeenergie kann berechnet werden und mit derjenigen Wärmeenergie verglichen werden, die ohne die Dämmmaßnahme bei gleichen Temperaturen durch die Dämmfläche treten würde. Die seit Durchführung der Sanierungsmaßnahme eingesparte Gesamtenergie kann in summierter Form angezeigt werden. Die Berechnung weiterer Dämmkenngrößen aus denselben und/oder weiteren Messwerten ist gleichermaßen möglich, wobei die Messwerte und die berechneten Dämmkenngrößen vorzugsweise in für den Nutzer aufbereiteter Form von der Anzeigeeinrichtung angezeigt werden.

Das Dämmelement kann eine Dämmplatte eines Wärmedämmverbundsystems sein. Die Auswirkungen der Installation eines Wärmedämmverbundsystems im Hinblick auf Energieverbrauch und Raumklima sind für den Nutzer von besonderem Interesse. Im Übrigen hat das Heiz- und Lüftverhalten des Nutzers in diesem Fall einen besonderen Einfluss auf die Auswirkung der Dämmmaßnahme.

Das Dämmelement kann aus Dämmstoffen wie etwa Mineralwolle (MW), expandiertem Polystyrol (EPS), Polyurethan (PUR/PIR), Phenolharz (PF) und/oder Holzfaser bestehen. In einer besonders bevorzugten Ausführungsform besteht das Dämmelement zumindest teilweise aus expandiertem Polystyrol, in das werkseitig bevorzugt je Elementseite eine oder mehrere, vorzugsweise zwei Messsensoren integriert sind. Expandiertes Polystyrol hat sich im Hinblick auf gute Dämmeigenschaften als besonders vorteilhaft herausgestellt.

Die Erfindung betrifft ferner ein Wärmedämmverbundsystem mit einer oder mit mehreren darin eingebauten erfindungsgemäßen Dämmelementanordnungen. Im Zuge der

Montage des Wärmedämmverbundsystems wird eine oder werden wahlweise mehrere erfindungsgemäße Dämmelementanordnungen an vorgesehener Stelle, idealerweise witterungsgeschützt ohne Sonneneinwirkung wie übliche WDVS-Platten montiert.

Die Erfindung betrifft weiterhin ein Verfahren zum Anbringen einer erfindungsgemäßen Dämmelementanordnung an einer zu dämmenden Struktur, insbesondere an einer Außenwand. Das Dämmelement der Dämmelementanordnung wird an einer Außenseite der Struktur angebracht, und ein Messsensor der Dämmelementanordnung wird vorzugsweise an einer der Außenseite entgegengesetzten Innenseite der Struktur angebracht. Dies ermöglicht die Messung des Umgebungsparameters zum einen im Inneren der zu dämmenden Struktur und zum anderen außerhalb der zu dämmenden Struktur an zumindest einer der Hauptflächen des Dämmelements, so dass die Auswirkungen der Dämmung überwacht und dargestellt werden können.

Vor dem Anbringen der Dämmplatte kann ein durch die Struktur führender Durchgang zur Durchführung von Anschlussleitungen der an der Dämmplatte angebrachten Messsensoren gebildet werden. Dies kann dadurch geschehen, dass vor dem Montieren der Dämmplatte an der Außenwand etwa mittig der Dämmplatte ein Loch durch die Außenwand gebohrt wird, um die Anschlussleitungen der Messsensoren in das Gebäudeinnere zu führen. Die Anschlussleitungen der Messsensoren können in einer an der Innenseite der Struktur gebildeten Verbindungsdose zusammengeführt werden. Eine Signalverarbeitungseinrichtung und/oder eine Anzeigeeinrichtung zum Anzeigen der Messwerte und/oder der aus den Messwerten berechneten Dämmungskenngrößen kann mit den in der Verbindungsdose zusammengeführten Anschlussleitungen verbunden werden. Die Anzeigeeinrichtung kann bspw. im Rauminneren in der Umgebung der Verbindungsdose angebracht werden.

In der folgenden Beschreibung wird die Erfindung unter Bezugnahme auf die Zeichnung beispielhaft erläutert. Die einzige Figur der Zeichnung zeigt eine schematische Querschnittdarstellung einer erfindungsgemäßen Dämmelementanordnung, die an einer zu dämmenden Struktur angebracht ist.

Die Figur zeigt die Außenwand 50 einer zu dämmenden Struktur, insbesondere eines Gebäudes, mit einem daran angebrachten Wärmedämmverbundsystem 1 in einer schematischen Querschnittdarstellung. Das Wärmedämmverbundsystem 1 weist zahlreiche Dämmplatten auf, die jeweils von zwei im Wesentlichen ebenen und etwa parallel zueinander verlaufenden Hauptflächen A, B begrenzt sind und die an der Außenwand 50 befestigt sind und diese bedecken. Das Wärmedämmverbundsystem 1 kann neben den Dämmplatten weitere Schichten aufweisen, insbesondere eine die Außenseite der Dämmplatten bedeckende Armierungsschicht und eine die Armierungsschicht bedeckende Außenputzschicht 70. Die dargestellte Dämmplatte 12 ist Teil einer erfindungsgemäßen Dämmelementanordnung 10.

Die Dämmelementanordnung 10 weist neben der Dämmplatte 12, die das Dämmelement bildet, mehrere Messsensoren 21, 22, 31, 32 auf, die jeweils an einer der Hauptflächen A, B der Dämmplatte 12 angebracht sind. Die dargestellte Dämmplatte 12 weist insgesamt vier Messsensoren auf, von denen zwei (21, 22) an der äußeren Hauptfläche A der Dämmplatte befestigt sind und zwei (31, 32) an der inneren Hauptfläche B der Dämmplatte befestigt sind. Die Messsensoren sind von außen nicht sichtbar, da sie von der Oberputzschicht 70 abgedeckt sind bzw. sich zwischen Dämmplatte 12 und Außenwand 50 befinden. Vorzugsweise sind die Messsensoren derart in die Dämmplatte 12 integriert, dass die Dämmplatte 12 wie die übrigen Dämmplatten des Wärmedämmverbundsystems an der Außenwand 50 montiert werden kann.

Die Messsensoren 21 und 31 sind zur Temperaturmessung eingerichtet und die Messsensoren 22 und 32 sind zur Luftfeuchtigkeitsmessung eingerichtet. Weitere Messsensoren zur Messung weiterer Umgebungsparameter wie etwa der Wärmeströme können vorgesehen sein. Alternativ kann nur ein Messsensor an der äußeren Hauptfläche und/oder der inneren Hauptfläche angebracht sein.

Zusätzlich weist die Dämmelementanordnung weitere Messsensoren 41 und 42 auf, die an der Innenseite C der Außenwand 50 angebracht sind und die zur Messung der Innentemperatur (41) und der Innenraum-Luftfeuchtigkeit (42) eingerichtet sind.

Die Dämmplatte 12 weist einen Durchgang 14 in einer etwa senkrecht zu den Hauptflächen A, B verlaufenden Richtung auf, durch den die Anschlusskabel 16 der an der äußeren Hauptfläche A angebrachten Messsensoren 21, 22 geführt sind, und die Außenwand 50 weist einen Durchgang 51 in Form eines Lochs auf, durch den die Anschlusskabel sowohl der an der äußeren Hauptfläche A als auch der an der inneren Hauptfläche B angebrachten Messsensoren geführt sind. Alle Anschlusskabel sind in einer Verbindungsdose 55 zusammengeführt, die an der Innenseite der Außenwand 50 angeordnet sein kann. Die Anschlusskabel sowohl der an der äußeren Hauptfläche angebrachten Messsensoren 21, 22 (nach dem Durchtreten der Durchführung 16) als auch die Anschlusskabel der an der inneren Hauptfläche angebrachten Messsensoren können ausgehend von der inneren Hauptfläche B eine Länge haben, die größer ist als eine Dicke X der Außenwand 50, so dass die Anschlusskabel durch die Durchführung 51 bis in das Rauminnere geführt werden können. Vorzugsweise ist diese Länge größer als 0,5 m. besonders bevorzugt etwa 1 m.

Die Anschlusskabel können mit einer Signalverarbeitungseinrichtung verbunden sein, die wiederum mit einer Anzeigeeinrichtung 60 verbunden sein kann. Die Anzeigeeinrichtung dient zum Anzeigen der von den Messsensoren gemessenen Umgebungsparameter und/oder zum Anzeigen von daraus berechneten Dämmungskenngrößen. Die Anzeigeeinrichtung kann einen im Rauminneren an einer Wand hängenden Monitor, ein Display o. dgl. aufweisen.

**Patentansprüche**

1. Dämmelementanordnung (10), insbesondere für die Fassadendämmung, mit einem Dämmelement (12), das von zwei im Wesentlichen ebenen und etwa parallel zueinander verlaufenden Hauptflächen (A, B) begrenzt ist, **dadurch gekennzeichnet, dass** die Dämmelementanordnung mindestens einen Messsensor (21, 22, 31, 32) zur Messung eines Umgebungsparameters, insbesondere einer Umgebungstemperatur, einer Luftfeuchtigkeit und/oder eines Wärmestroms aufweist, der einer der Hauptflächen (A, B) des Dämmelements (12) zugeordnet, insbesondere daran angebracht ist.

2. Dämmelementanordnung nach Anspruch 1, **gekennzeichnet durch** einen zweiten Messsensor (31, 32) zur Messung eines Umgebungsparameters, der der der ersten Hauptfläche (A) entgegengesetzten zweiten Hauptfläche (B) des Dämmelements (12) zugeordnet, insbesondere daran angebracht ist.

3. Dämmelementanordnung nach Anspruch 1 oder 2, **dadurch gekennzeichnet, dass** der erste Messsensor (21, 22) in die erste Hauptfläche (A) des Dämmelements integriert ist und/oder der zweite Messsensor (31, 32) in die zweite Hauptfläche (B) integriert ist.

4. Dämmelementanordnung nach einem der Ansprüche 1 bis 3, **gekennzeichnet durch** mindestens einen dritten Messsensor (41, 42) zur Messung eines Umgebungsparameters im Inneren einer mit dem Dämmelement zu dämmenden Struktur (50), der unter einem Abstand (X) von der der zu dämmenden Struktur (50) zugewandten inneren Hauptfläche (B) des Dämmelements (12) angeordnet ist.

5. Dämmelementanordnung nach einem der vorhergehenden Ansprüche, **dadurch gekennzeichnet, dass** der erste Messsensor (21) ein äußerer Messsensor zur Messung der Umgebungstemperatur an der äußeren Hauptfläche (A) des Dämmelements, der zweite Messsensor (31) ein innerer Messsensor zur Messung der Umgebungstemperatur an der inneren Hauptfläche (B) des Dämmelements und/oder der dritte Messsensor (41) ein Messsensor zur Messung einer Innenraumtemperatur (C) ist.

6. Dämmelementanordnung nach einem der vorhergehenden Ansprüche, **dadurch gekennzeichnet, dass** der erste Messsensor (22) ein äußerer Messsensor zur Messung der Luftfeuchtigkeit an der äußeren Hauptfläche (A) des Dämmelements, der zweite Messsensor (32) ein innerer Messsensor zur Messung der Luftfeuchtigkeit an der inneren Hauptfläche (B) des Dämmelements und/oder der dritte Messsensor (42) ein Messsensor zur Messung einer Innenraumluftfeuchtigkeit (C) ist.

7. Dämmelementanordnung nach einem der vorhergehenden Ansprüche, **gekennzeichnet durch** mindestens zwei an jeder Hauptfläche (A, B) des Dämmelements (12) angebrachte Messsensoren (21, 22; 31, 32) zur Messung verschiedener Umgebungsparameter.

8. Dämmelementanordnung nach einem der vorhergehenden Ansprüche, **gekennzeichnet durch** eine **durch** das Dämmelement hindurchführende Durchführung (14) zum Durchführen von Anschlussleitungen (16) mindestens eines Messsensors (21, 22) **durch** das Dämmelement in einer quer, insbesondere etwa senkrecht zu den Hauptflächen (A, B) verlaufenden Richtung.

9. Dämmelementanordnung nach Anspruch 8, **dadurch gekennzeichnet, dass** Anschlussleitungen (16) mindestens eines an der äußeren Hauptfläche (A) angebrachten Messsensors (21, 22) durch die Durchführung geführt sind und an der inneren Hauptfläche (B) aus dem Dämmelement heraustreten.

10. Dämmelementanordnung nach Anspruch 8 oder 9, **dadurch gekennzeichnet, dass** eine Länge (X) der Anschlussleitungen der Messsensoren (21, 22, 31, 32) ausgehend von der inneren Hauptfläche (B) des Dämmelements länger ist als 30 cm, insbesondere länger ist als 50 cm, insbesondere etwa 1 m oder mehr beträgt.

11. Dämmelementanordnung nach einem der vorhergehenden Ansprüche, **gekennzeichnet durch** eine mit den Messsensoren gekoppelte Signalverarbeitungseinrichtung, die zur Berechnung einer Dämmungskenngröße aus einem oder mehreren der gemessenen Umgebungsparameter eingerichtet ist.

12. Dämmelementanordnung nach einem der vorhergehenden Ansprüche, **gekennzeichnet durch** eine Anzeigevorrichtung (60), insbesondere ein Display zum Anzeigen von gemessenen Umgebungsparametern und/oder einer aus den Messwerten berechneten Dämmungskenngröße.

13. Dämmelementanordnung nach einem der vorhergehenden Ansprüche, **dadurch gekennzeichnet, dass** das Dämmelement (12) eine Dämmplatte eines Wärmedämmverbundsystems ist.

14. Dämmelementanordnung nach einem der vorhergehenden Ansprüche, **dadurch gekennzeichnet, dass** das Dämmelement (12) Mineralwolle (MW), expandiertes Polystyrol (EPS), Polyurethan (PUR/PIR), Phenolharz (PF) und/oder Holzfaser aufweist.

15. Wärmedämmverbundsystem (1) mit einer oder mit mehreren darin eingebauten Dämmelementanordnungen nach einem der vorhergehenden Ansprüche.

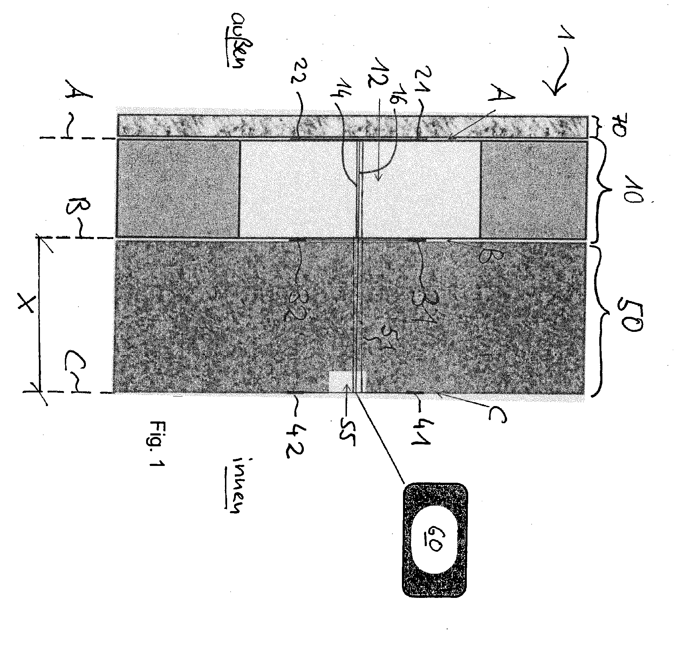

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2012022393 A